# EUROPEAN PATENT SPECIFICATION

(11) **EP 3 924 619 B1**
(45) Date of publication and mention of the grant of the patent: **23.08.2023**
(21) Application number: 20704354.8
(22) Date of filing: 17.01.2020
(51) Int. Cl.: F03D 1/06, F03D 3/06, F03D 7/02

(54) **WIND TURBINE**
WINDTURBINE
ÉOLIENNE

(30) Priority: 11.02.2019 IT 201900001907
(43) Date of publication of application: 22.12.2021
(73) Proprietor: Guariglia, Daniel, 1050 Ixelles (BE)
(72) Inventor: Guariglia, Daniel, 1050 Ixelles (BE)
(74) Representative: Celona, Antonio
(86) International application number: PCT/IB2020/050373
(87) International publication number: WO 2020/165663

(56) References cited:
- EP-A2- 2 320 076
- EP-A2- 2 333 317
- EP-A2- 2 469 076
- WO-A1-2007/035758
- WO-A1-2018/095496
- CA-A1- 3 045 209
- US-A1- 2012 082 562
- US-B2- 7 435 057

## Description

### Field of the invention

The present invention relates to turbines, for example wind or water turbines. In particular, the present invention relates to optimizing the blades of turbines.

### Background art

Turbines are fluid prime movers comprising fixed parts, for example the stator and distributor, and movable parts, for example the rotor. The rotor comprises one or more shaped elements called blades. The rotor, also called impeller, is the element which extracts energy from the fluid by means of the work developed on the rotating surfaces.

Wind turbines of the horizontal- or vertical-type axis are an example of turbines. The blades are fundamental elements of a turbine and the optimization thereof may result in significant benefits from various viewpoints.

The objects of turbine designers, in particular wind turbines, include: the reduction of the wing surface of the blades; the reduction of the weight of the blades; the reduction of the noise and of the vibrations generated by the turbine, in particular due both to the rotation of the movable parts and the interaction of said movable parts with the fluid; improvement of the startup of the turbine; and the improvement of the performance under conditions different from the point of maximum efficiency of the turbine.

To date, in order to reach such objects, designers typically act on the outer geometry of the blades or on the materials with which they are made.

However, the level of aerodynamic optimization of the blades in particular is not yet completely satisfactory and the need in general is felt to overcome the limits of the prior art. One known prior art approach is disclosed in WO 2007/035758 A1.

### Summary of the invention

It is an object of the present invention to make a turbine provided with at least one blade which allows the performance to be improved with respect to the known turbines.

It is another object of the present invention to make a turbine which allows an active control of the boundary layer on a blade or wing profile, to be obtained.

The present invention achieves at least one of such objects, and other objects which will be apparent in light of the present description, by means of a turbine comprising at least one blade, the at least one blade comprising:
- at least one suction duct in the blade, having at least one inlet opening for a fluid into which the at least one blade can be immersed;
- at least one delivery duct in the blade, having at least one outlet opening for the fluid; wherein the at least one suction duct and the at least one delivery duct are connected to each other;
   wherein the turbine comprises suction means adapted to generate a flow of fluid from the at least one suction duct to the at least one delivery duct, preferably wherein said at least one blade comprises a first outer face and a second outer face, opposite to the first outer face;
   preferably wherein said at least one inlet opening and said at least one outlet opening are at said first outer face;
   and preferably wherein said at least one inlet opening and said at least one outlet opening face each other.

Advantageously, by providing in particular that said at least one inlet opening and said at least one outlet opening are at a same outer face of the blade, and that they face each other, the increase in circulation of fluid about at least part of the wing profile is particularly optimized, thus allowing the lift to be significantly increased and the aerodynamic resistance of a blade to be significantly reduced.

Optionally, in all the embodiments, the turbine comprises thermal conditioning means adapted to heat and/or cool the fluid which crosses said at least one blade. Said at least one inlet opening and said at least one outlet opening in particular are distinct from each other.

The inlet opening preferably is proximal to the trailing edge of the at least one blade and distal from the leading edge; and the outlet opening is proximal to the leading edge and distal from the trailing edge, or vice versa.

For example, the inlet opening may substantially be at the trailing edge and the outlet opening may substantially be at the leading edge, or vice versa.

Optionally, in all embodiments, the turbine comprises a control system configured to control the power supplied to the suction means and/or to the thermal conditioning means (when provided) according to one or more physical quantities correlated with the operation of the turbine.

Advantageously, by activating the suction means, at least one flow of fluid on the surface of the blade is established.

In particular, a flow of fluid, e.g. air, leaves the delivery opening, which flow of fluid may be a continuous or intermittent flow according to the activation status (ON/OFF) of the suction means.

Simultaneously, fluid is drawn through the inlet opening, which fluid firstly enters into the suction duct and then is conveyed into the delivery duct, from which the fluid leaves.

The suction means may be for example, a pump, a compressor or a fan. The suction means are adapted to raise the pressure and/or the speed of the incoming flow and convey it into the delivery duct.

The turbine, the blade in particular, preferably is configured so that the quantity of mass flow which is blown through the outlet opening is equal, or substantially equal, to the quantity of mass flow which is sucked through the inlet opening.

The at least one flow of fluid which is generated on the surface of the blade allows the boundary layer on the surface of the blade to be altered.

Advantageously, the invention in particular allows an active control of the boundary layer to be obtained.

In greater detail, "active control" means that the alteration or the control of the boundary layer may be obtained both by activating and deactivating the suction means according to needs and by adjusting the flow generated by the suction means, for example from a minimum in which the ventilation means are turned OFF to a maximum corresponding to the maximum flow obtainable by means of the suction means, and optionally by adjusting the quantity of heat added or subtracted by means of the thermal conditioning means (when provided), for example from a minimum in which the thermal conditioning means are OFF to a maximum corresponding to the maximum or to the minimum temperature which can be tolerated by the materials forming the blade.

The invention allows the lift to be significantly increased and the aerodynamic resistance of a blade (also called wing profile) to be significantly reduced by the increase of the circulation of the fluid about at least part of the wing profile and delaying the aerodynamic stall.

The invention in particular allows the maximum value of the lift coefficient (C_{L}) of a wing profile to be increased, also beyond the theoretical limit. Such an increase may be obtained in particular because the stall is delayed at larger angles of attack. Advantageously, the maximum C_{L} (C_{L,max}) obtainable may go beyond the limit of the Smith Theory according to which a wing profile immersed in an incompressible potential flow generates a C_{L,max} = π(1 + *t*/*c*) at an attack angle equal to 90°, where *t* is the thickness of the wing profile and c is the chord of said wing profile.

Moreover, the invention also allows the minimum value of the resistance coefficient (C_{D}) to be reduced. The at least one flow which is generated on the surface of the blade in particular induces a forward thrust, countering the friction force also up to obtaining a negative C_{D}.

The at least one blade preferably comprises a plurality of said suction ducts, which are distinct from one another, each provided with at least one respective inlet opening; and/or a plurality of said delivery ducts, which are distinct from one another, each provided with at least one respective outlet opening;
wherein each suction duct is connected to at least one delivery duct;
and wherein there are provided suction means adapted to generate a flow of fluid from each suction duct to the at least one delivery duct connected thereto.

Preferably, at least one suction duct of said plurality of suction ducts is connected to two or more delivery ducts of said plurality of delivery ducts; and/or at least two suction ducts of said plurality of suction ducts are connected to a same delivery duct of said plurality of delivery ducts.

Thereby, advantageously there are distinct and independent systems along the length of the blade so that various stretches of the blade can be controlled separately.

Further advantages of the invention are indicated below:
- reduction of the wing surface: the increase of C_{L} allows the wing surface to be reduced, at the same conditions of asymptotic speed of the fluid and at the same rotation speed of the rotor to obtain the same momentum on the hub;
- reduction of the weight of the blade: the reduction of the wing surface results in a reduction in weight of the blade, which is one of the greatest problems in making large wind turbines;
- possibility of reducing the rotation speed: the turbine according to the invention requires a lower rotation speed with respect to a known turbine, with lower centrifugal forces, asymptotic speed conditions of the fluid and of extracted power being equal;
- reduction of the noise: by virtue of the lower rotation speed and of the lesser wing surface, the wind turbine according to the invention generates less noise with respect to the known turbines, extracted power being equal;
- reduction or elimination of the hysteresis of the lift curve of the wing profile: a wing profile of a known turbine, for example a known wind turbine, subject to a variable angle of attack over time with a characteristic frequency, shows a hysteresis behavior in the lift curve. This implies that to go from an angle α₁ to an angle α₂ (with α₂ > α₁), curve C_{L}- angle of attack is different from curve C_{L} - angle of attack to come back from angle α₂ to angle α₁. A turbine according to the invention instead may reduce or cancel this phenomenon which may result in vibration problems in the turbine;
- reduction of vibrations associated with the turbulence and the separation of the boundary layer: a turbine according to the invention allows the boundary layer to be stabilized, significantly reducing the risk of separation of the boundary layer from the wing profile, and therefore reducing the lift and resistance fluctuations which stress the turbine structure;
- optimization of the startup of the turbine, for example a wind turbine: sometimes known wind turbines need a starter motor to start rotation. A turbine, for example a wind turbine, according to the invention may instead be put into rotation also with very low or null wind speed by means of the activation of the suction means, thus eliminating the need for a powerful starter motor. Indeed, the increase of the lift causes the momentum on the turbine hub to increase, and therefore causes the minimum wind speed required to start up the turbine, for example the wind turbine, to be decreased. Moreover, the air jet generated on the surface of the at least one blade provides a forward thrust, also with asymptotic speed of the fluid equal to zero. By conveniently angling the blades, a rotation may therefore be imparted on the turbine, e.g. wind turbine, according to the invention, also in the absence of wind;
- improvement of the performance under various conditions in terms of maximum efficiency of the turbine, e.g. wind turbine. Known turbines, e.g. wind turbines, are designed to have one point of maximum extraction efficiency of the wind power alone. Such a point results in a wind and rotation speed which are preset by the geometry of the rotor, outside of which the extraction efficiency is lower. A turbine, for example a wind turbine, according to the invention, instead allows the performance to be improved, in particular allows more power to be extracted, also outside the maximum efficiency point, with respect to known turbines, e.g. wind turbines. For example, the aerodynamic features of the wing profiles may be radically changed by adjusting the power of the suction means and/or of the thermal conditioning means, for example by means of a control system. In particular, when the wind conditions change, a maximum energy extraction condition of the wind may be pursued by varying the rotation speed, the pitch angle of the blades (or angle of attack) and the power of the suction means and/or of the thermal conditioning means, when provided.

Further features and advantages of the invention will be more apparent in light of the detailed description of non-exclusive embodiments.

The dependent claims describe particular embodiments of the invention.

### Brief description of the drawings

In the description of the invention, reference is made to the accompanying drawings, which are provided by way of a non-limiting example, in which:
Fig. 1 shows a top view of part of a turbine according to a first embodiment of the invention;
Fig. 2 shows an enlarged detail of Fig. 1;
Fig. 3 shows a view of section A-A of the turbine in Fig. 1;
Fig. 4 shows a sectional perspective view of a part of the turbine in Fig. 1, with certain inner parts shown;
Fig. 5 shows a top plan view of a section of the part of turbine in Fig. 1;
Fig. 6 shows an enlarged detail of Fig. 5, in particular section B-B indicated in Fig. 3;
Fig. 7 shows a top plan sectional view of part of a turbine according to a second embodiment;
Fig. 8 shows an enlarged detail of Fig. 7;
Fig. 9 shows a sectional perspective view of a part of turbine in Fig. 7, with certain inner parts shown;
Fig. 10 shows a sectional perspective view of part of a turbine according to a third embodiment;
Fig. 11 shows a sectional perspective view of the part of the turbine in Fig. 10, with certain inner parts shown
Fig. 12 shows a sectional perspective view of part of a turbine according to a fourth embodiment, with certain inner parts shown;
Fig. 13 shows a perspective view of part of a turbine according to a fifth embodiment;
Fig. 14 diagrammatically shows a particular example of a component of a turbine according to the invention;
Fig. 15 shows a diagram of an example of a control method of a turbine according to the invention.

The same elements or components, or mutually similar elements or components, have the same reference numeral.

### Description of embodiments of the invention

In all the embodiments, a turbine according to the invention comprises at least one blade 1 which preferably defines a longitudinal axis X, and the blade 1 comprises at least one suction duct 11 within the blade 1, having at least one inlet opening 13 for a fluid into which the at least one blade 1 is immersed; and at least one delivery duct 12 within the blade 1, having at least one outlet opening 14 for the fluid. The blade is also indicated with reference numerals 101, 201, 301 and 401, and the longitudinal axis of the blade is also indicated with reference X'.

The suction duct 11 and the delivery duct 12 are connected to each other. In particular, the suction duct 11 and the delivery duct 12 are connected to each other so that the fluid can pass from the suction duct 11 to the delivery duct 12.

The turbine comprises means, in particular suction means 21, adapted to generate a flow of fluid from the suction duct 11 to the delivery duct 12.

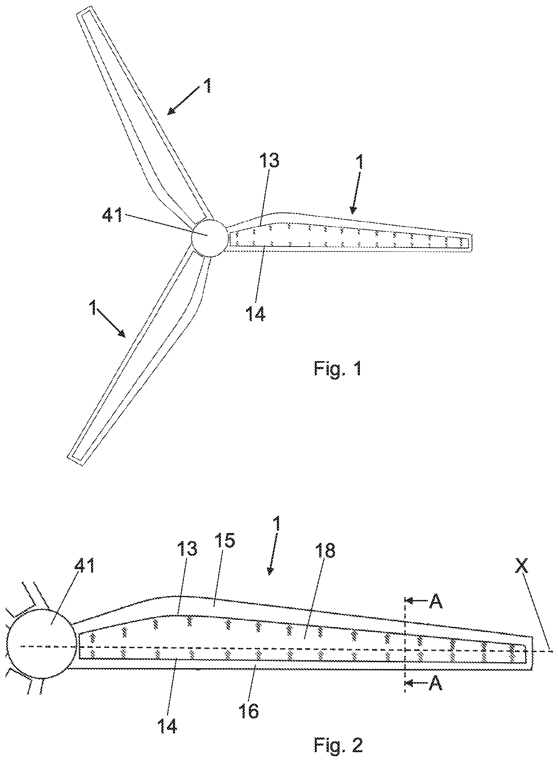

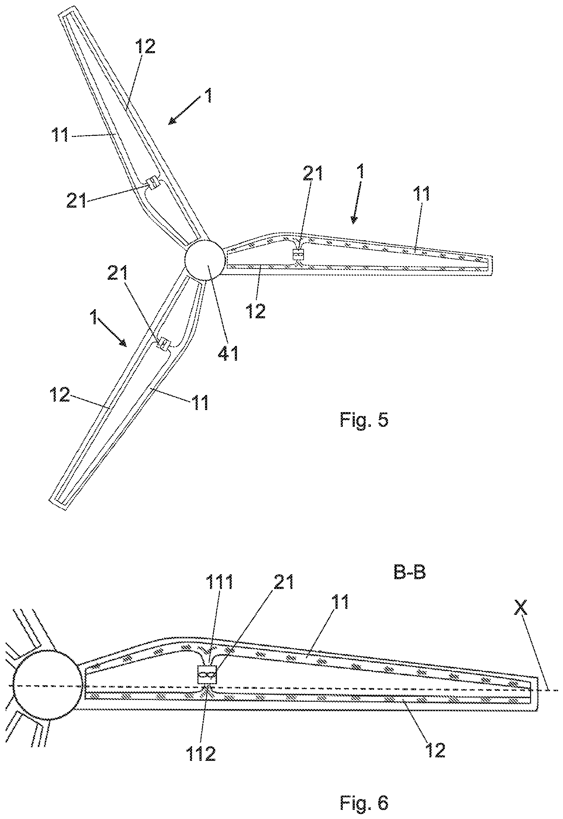

In particular, the suction means 21 are arranged so as to generate a flow of fluid which, in sequence, enters from the inlet opening 13, crosses the suction duct 11, crosses the delivery duct 12 and leaves from the outlet opening 14, as schematized in Figures 1, 2, 3, 4, 5, 6, 10 and 12.

The suction means 21 preferably comprise one or more suction devices for each pair of suction and delivery ducts with which blade 1 is provided.

Each suction device preferably is or comprises a compressor or a pump or a fan or other similar device. Typically, but not exclusively, the suction device comprises an inlet opening, through which the fluid may enter, and an outlet opening, through which the fluid may leave.

The suction means 21 preferably are arranged inside blade 1 and/or in a structure of the turbine which is different from blade 1, for example the shaft or the hub or column, as is further described later.

Preferably, the outlet opening 14 is arranged frontally with respect to the direction of rotation of blade 1, and the inlet opening 13 is arranged at the back with respect to the direction of rotation of blade 1.

Preferably, the delivery duct 12 is arranged frontally with respect to the direction of rotation of blade 1, and the suction duct 11 is arranged at the back with respect to the direction of rotation of blade 1.

The suction duct or channel 11 and the delivery duct or channel 12 preferably are delimited by a respective inner wall of blade 1 and at least partially, for example completely, extend in blade 1.

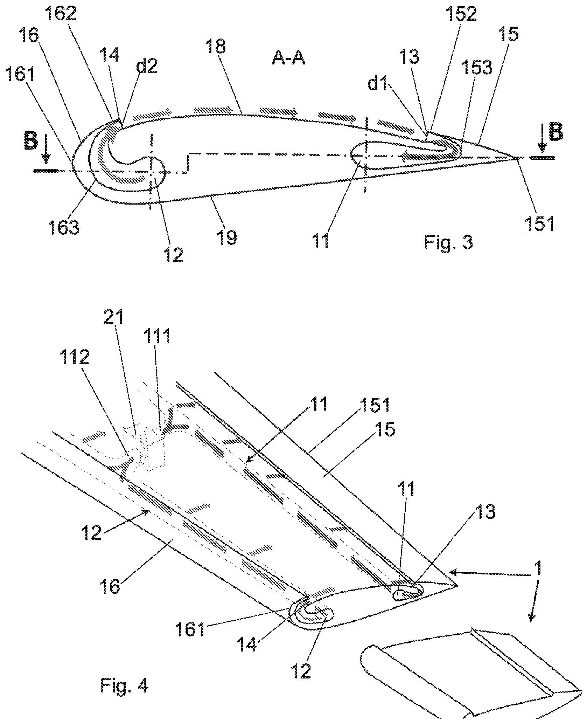

As shown for example in Fig. 3, preferably, the inner wall of blade 1 which delimits the suction duct 11 comprises a curved portion 153, preferably with concavity facing the inside of blade 1, preferably towards the longitudinal axis X of blade 1. Similarly, it is preferable that the inner wall which delimits the delivery duct 12 comprises a curved portion 163, preferably with concavity facing the inside of blade 1, preferably towards the longitudinal axis X of blade 1.

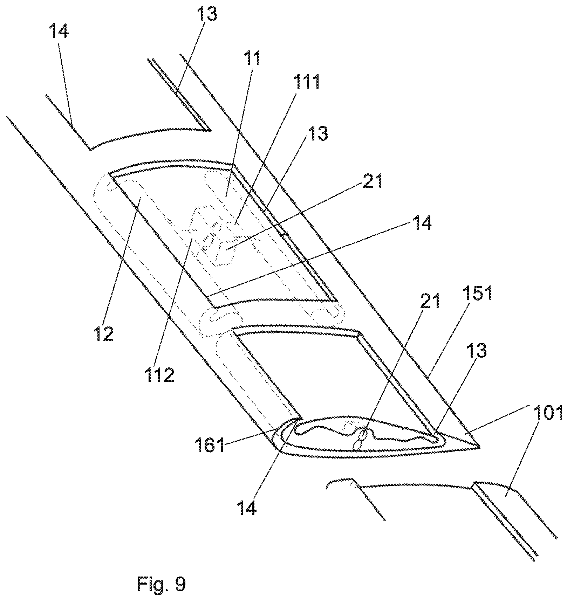

With particular reference to Figures 4 to 9, preferably, the suction duct 11 comprises a stretch 111 connected to a stretch 112 of the delivery duct 12. In an embodiment, said stretches of duct are also indicated with reference numerals 311 and 312.

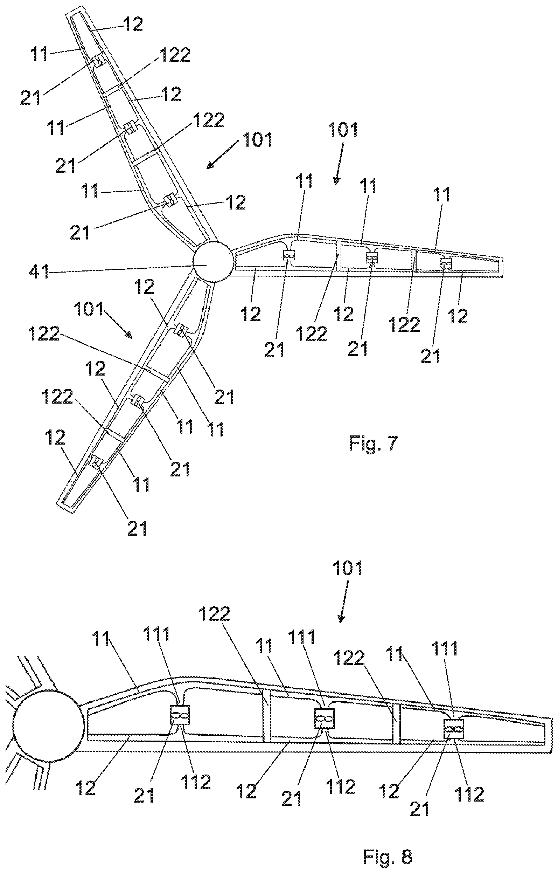

Note that the suction duct 11 and the delivery duct 12 may be connected to each other in several distinct zones. For example, there may be provided two or more stretches 111, and preferably a corresponding number of stretches 112, as shown in Figures 7 and 8.

By way of example, each stretch 111 may be connected to a respective stretch 112 by means of the suction means 21; or each stretch 111 and the respective stretch 112 may be connected to each other so as to form for example, a single stretch of duct, and the suction means 21 may be arranged in the stretch of duct formed by each stretch 111 and by the respective stretch 112. Note that the suction duct 11 and the delivery duct 12 may also be directly connected to each other by means of the suction means 21, in particular without the stretches 111, 112.

The connection between the one or more suction ducts 11 and the one or more delivery ducts 12 may be obtained also by means of other methods which the skilled person may easily determine in light of the present description. For example, two suction ducts 11 may be connected by means of two or more stretches 111 to a same suction device 21, the latter being in communication with one or more stretches 112 of one or more delivery ducts 12.

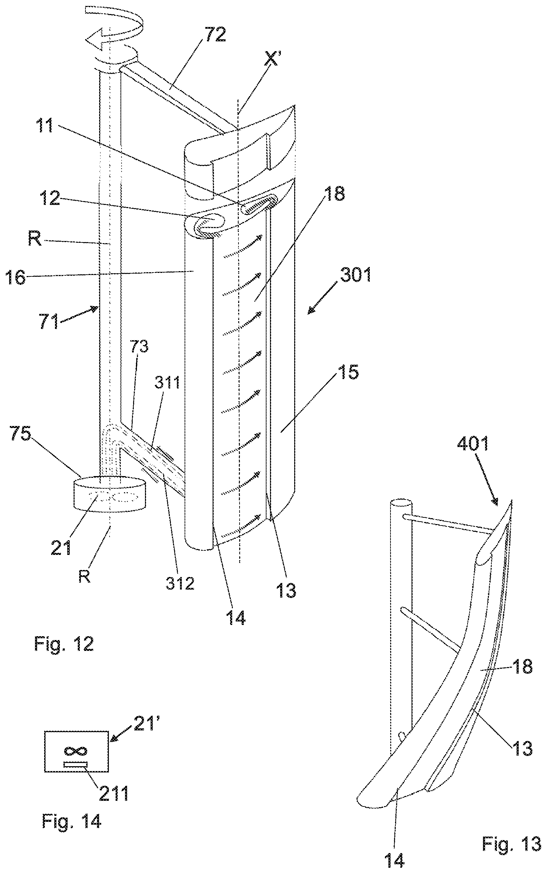

The stretches 111, 112 preferably are within the blade 1, as shown in Figures 4, 6, 8 and 9; or the stretches 311, 312 may be outside the blade 301 (Fig. 12).

The stretches 111, 112 preferably extend transversely, e.g. orthogonally, with respect to the longitudinal axis X of blade 1.

Preferably, each stretch 111 extends transversely with respect to the remaining part of the suction duct 11, and each stretch 112 extends transversely with respect to the remaining part of the delivery duct 12.

Blade 1 preferably comprises a first outer face 18 and a second outer face 19, opposite to the first outer face 18.

The first outer face 18 and the second outer face 19 preferably are the two faces which have the greatest surface extension of the blade 1.

The first outer face 18 is the suction-side of blade 1 for example, and the second outer face 19 is the pressure-side of blade 1 for example.

The inlet opening 13 preferably is at the first outer face 18 or at the second outer face 19; and the outlet opening 14 is at the first outer face 18 or at the second outer face 19.

The inlet opening 13 and the outlet opening 14 preferably are at the same outer face, for example at the first outer face 18, as shown in Figures 1, 2, 3, 4, 9, 10, 11, 12 and 13, or at the second outer face 19.

The inlet opening 13 and the outlet opening 14 preferably are opposite to each other with respect to an axis defined by blade 1, said axis preferably being the longitudinal axis X of blade 1. When more than one inlet opening 13 and more than one outlet opening 14 are provided, each inlet opening 13 preferably is opposite to a respective outlet opening 14, in particular with respect to an axis defined by blade 1, said axis preferably being the longitudinal axis X of blade 1.

In particular, the inlet opening 13 and the outlet opening 14 preferably face each other. When more than one inlet opening 13 and more than one outlet opening 14 are provided, each inlet opening 13 faces a respective outlet opening 14.

With particular reference to Fig. 3, the inlet opening 13 preferably is partly delimited by the first outer face 18 (or by the second outer face 19) and partly by an end 152 (or end edge) of a side portion 15 of blade 1. End 152 faces, and is spaced apart from, the first outer face 18.

Distance "d1", in particular the minimum distance between the first outer face 18 and end 152, preferably is between 0.1% and 10% of the length of the wing chord, which is defined below.

The outlet opening 14 preferably is partly delimited by the first outer face 18 (or by the second outer face 19) and partly by an end 162 (or end edge) of another side portion 16 of blade 1. End 162 faces, and is spaced apart from, the first outer face 18.

Distance "d2", in particular the minimum distance between the first outer face 18 and end 162, preferably is between 0.1% and 10% of the length of the wing chord. Distance d1 preferably is greater than or equal to distance d2.

Preferably, the inlet opening 13 and the outlet opening 14 substantially are slits.

Preferably, the length of the inlet opening 13 along the longitudinal axis X is greater, preferably much greater, than distance d1; and the length of the outlet opening 14 along the longitudinal axis X is greater, preferably much greater, than distance d2.

The inlet opening 13 and the outlet opening 14 preferably substantially extend for the whole or for part of the length of blade 1.

The longitudinal ends of blade 1 preferably are closed, in particular they do not have openings.

The side portion 15 and the side portion 16 of blade 1 are opposite to each other, for example opposite to the longitudinal axis X.

The side portion 15 comprises an outer side edge 151, and the side portion 16 comprises an outer side edge 161. The side edge 161 is opposite to the side edge 151, for example opposite to the longitudinal axis X.

Preferably, the outer side edge 161 is called "leading edge" and the outer side edge 151 is called "trailing edge".

The minimum distance between the leading edge 161 and the trailing edge 151 is called "wing chord" or "chord".

The leading edge 161 and the trailing edge 151 are arranged frontally and at the back, respectively, with respect to the direction of rotation of blade 1.

The inlet opening 13 and the outlet opening 14 preferably are arranged between the leading edge 161 and the trailing edge 151.

Preferably, the inlet opening 13 is proximal to the trailing edge 151 and distal from the leading edge 161; and the outlet opening 14 is proximal to the leading edge 161 and distal from the trailing edge 151.

The inlet opening 13 preferably is arranged at a distance from the trailing edge 151 which is between 25% and 90% of the length of the chord.

The outlet opening 14 preferably is arranged at a distance from the leading edge 161 which is less than or equal to 80% of the length of the chord.

The inlet opening 13 optionally may have one or more breaks. In other words, there may be provided two or more distinct inlet openings which communicate with the same suction duct 11.

Similarly, the outlet opening 14 optionally may have one or more breaks. In other words, there may be provided two or more distinct outlet openings which communicate with the same delivery duct 12.

Note that the turbine may also comprise more than one blade 1 having the features described above.

In particular, it is preferable that the blades 1 are be equal, or substantially equal, to one another.

In all the embodiments, the fluid into which blade 1 is immersed, i.e. which surrounds blade 1, preferably is air. The turbine may be a wind turbine, for example.

Alternatively, the fluid into which blade 1 is immersed may be a liquid, e.g. water. The turbine may be a water turbine, for example.

In a first particular embodiment shown in Figures 1 to 6, the turbine preferably comprises three blades 1 fastened to a same hub 41 adapted to rotate about a rotation axis.

The rotation axis preferably is transverse, preferably orthogonal, to the longitudinal axis X of each blade 1.

The longitudinal axes X of each blade 1 preferably are arranged at about 120 ° from one another.

Each blade 1 preferably comprises a suction duct 11 provided with an inlet opening 13, and a delivery duct 12 provided with an outlet opening 14.

A stretch 111 of the suction duct 11 is connected to a stretch 112 of the delivery duct 12.

Stretch 111 and stretch 112 may be connected to each other according to the methods described above; stretch 111 in particular may be connected to stretch 112 by means of the suction means 21; or stretch 111 and stretch 112 may be connected to each other so as to form for example, a single stretch of duct, and the suction means 21 may be arranged in the stretch of duct formed by stretch 111 and by stretch 112.

The stretches 111, 112 extend in the respective blade 1 and the suction means 21 are arranged in the respective blade 1.

In a second particular embodiment shown in Figures 7 to 9, each blade 101 comprises a plurality of said suction ducts 11, which are distinct from one another, each provided with at least one respective inlet opening 13; and a plurality of said delivery ducts 12, which are distinct from one another, each provided with at least one respective outlet opening 14.

In particular, each pair of suction and delivery ducts is independent of the others, and the pairs are separated from one another by means of one or more partition walls 122.

Each suction duct 11 is connected to a respective delivery duct 12.

There are provided suction means 21 in the blade 101, adapted to generate a flow of fluid from each suction duct 11 to each delivery duct 12. In particular, there are provided suction means 21 for each pair of suction and delivery ducts.

In the first and second embodiment, the turbine preferably is of the horizontal-axis type.

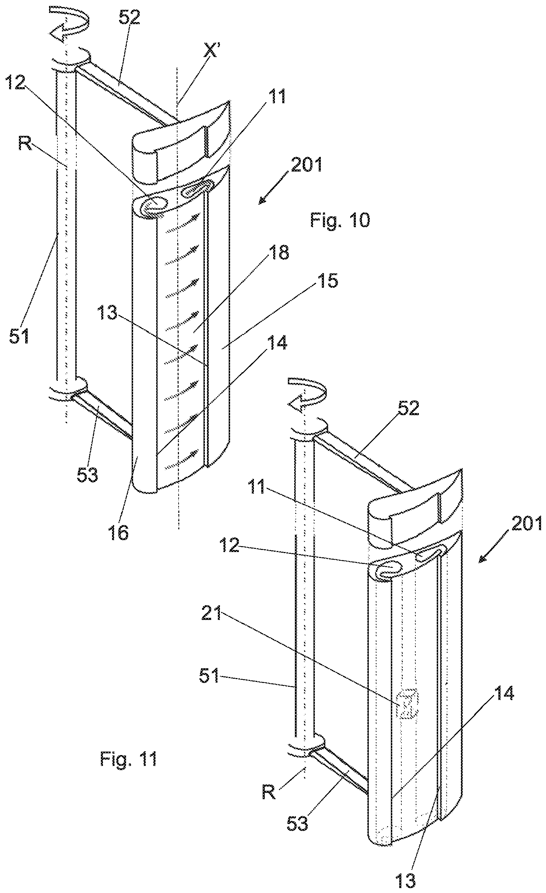

A third particular embodiment (Figures 10 and 11) shows an example of turbine of the vertical-axis type.

The turbine in particular comprises a shaft 51 adapted to rotate about a rotation axis R, in particular a vertical rotation axis, preferably orthogonal to the direction of the asymptotic speed of the fluid.

The turbine comprises at least one blade 201 integrally fastened to shaft 51 by means of arms 52, 53, two arms for example.

The longitudinal axis X' of blade 201 is parallel, or substantially parallel, to the rotation axis R.

Preferably, the suction duct 11 and the delivery duct 12 are connected, in particular directly connected, to each other by means of the suction means 21. Note that the transverse stretches 111, 112 described above are optional.

The suction means 21 are arranged in blade 201, in particular between the suction duct 11 and the delivery duct 21.

A fourth embodiment (Fig. 12) shows another example of turbine of vertical-axis type, in which the longitudinal axis X' of blade 301 is parallel, or substantially parallel, to the rotation axis.

In this case, unlike the third embodiment, the suction means 21 are arranged in a structure of the turbine which is different from blade 301.

The suction means 21 in particular are arranged in shaft 71, which is adapted to rotate about the rotation axis R, to which blade 301 is fastened by means of arms 72, 73. For example, the suction means 21 may be arranged in a housing 75 preferably arranged at the base of shaft 71.

Preferably, in this embodiment, the suction means 21 comprise a suction device which is or comprises a compressor or a pump. The suction device comprises an inlet opening, through which the fluid may enter, and an outlet opening, through which the fluid may leave.

By mere way of example, there may be provided a stretch 311 of the suction duct 11 which extends in one of the arms 73 and in shaft 71 up to reaching the suction means 21. Stretch 311 is connected to the inlet opening of the suction means 21.

Similarly, there may be provided a stretch 312 of the delivery duct 12 which extends in arm 73 and in shaft 71 up to reaching the suction means 21. Stretch 312 is connected to the outlet opening of the suction means 21.

Thereby, as with the other embodiments, the suction means 21 may generate a flow of fluid from the suction duct 11 to the delivery duct 12.

Fig. 13 shows another example of vertical-axis turbine. With the exception of the shape, i.e. of the geometry, of blade 401, the other features of the turbine may be equal, or substantially equal, to the features of the third or of the fourth embodiment. This example is provided in particular to show to the skilled expert that the invention is applicable to various shapes of the blade, or of the blades, of a turbine.

Optionally, in all the embodiments, the turbine comprises thermal conditioning means 211 (Fig. 14) adapted to heat and/or cool the fluid which crosses said at least one blade 1, in particular from the suction duct 11 to the delivery duct 12.

The thermal conditioning means 211 in particular are adapted to raise and/or reduce the overall temperature of the fluid.

The thermal conditioning means 211 may for example comprise an electric resistor, a heat exchanger or a combustor.

Heating means for example may be provided such as for example, an electric resistor, a heat exchanger or a combustor, and/or cooling means may be provided such as for example a heat exchanger.

The thermal conditioning means 211 are arranged in the turbine, preferably in the blade 1.

The thermal conditioning means 211 may for example be integrated in the suction means 21', as diagrammatically shown for example in Fig. 14, or they may be arranged in sequence with respect to the suction means, in particular before or after the suction means with respect to the direction of the flow of fluid from the at least one suction duct 11 to the at least one delivery duct 12; or in parallel with respect to the suction means 21'.

Optionally, in all embodiments, the turbine comprises a control system configured to control the power supplied to the suction means and/or to the thermal conditioning means (when provided) according to one or more physical quantities associated with the operation of the turbine.

Said physical quantities may be, by mere way of non-limiting example, the speed of the wind and/or the direction of the wind and/or the power generated by the turbine and/or the pitch setting of the blade and/or the atmospheric pressure and/or the atmospheric temperature and/or the position of the rotor and/or the rotation speed of the rotor and/or other measurable quantities which are useful in determining the status of the turbine and the wind.

According to these measurements, the control method establishes an adequate control for the suction means and/or the thermal conditioning means.

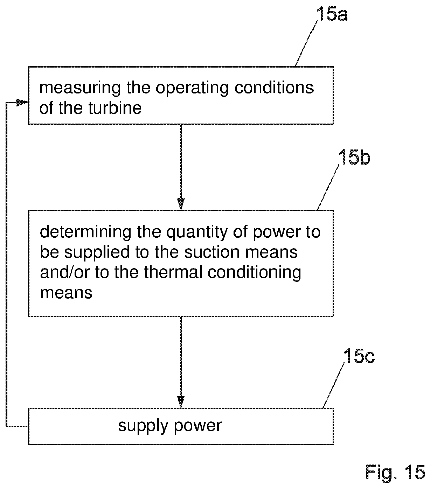

With reference to Fig. 15, an example of control method of a turbine according to the invention by means of said control method, is described below.

The control method comprises the steps of:
a) measuring the operating conditions of the turbine, in particular by measuring one or more of the aforesaid physical quantities (block 15a);
b) determining the power to be supplied to the suction means and/or to the thermal conditioning means (when provided) according to one or more of the aforesaid physical quantities measured (block 15b). Such a function may for example, be stored in the autonomous control system of the isolated blade, or of the whole turbine, or on an external system, for example a controller capable of simultaneously sending controls to various turbines.

The quantity of power supplied may be established *a priori* by following the test or simulation results carried out beforehand, or may be functional to reaching one or more measurable objects, for example the power of the turbine, the thrust of the rotor, the vibrations of the rotor, etc. By way of non-limiting example, the control function may provide an algorithm having the target of maximizing the power generated by the turbine by varying the power supplied up to reaching such a maximum value and being stabilized. Advantageously, such a control may have the target of minimizing oscillations of the blade in order to reduce the structural damage caused by the fatigue and extend the life of the blade.

After step b), i.e. after the quantity of power to be supplied is determined, the power may be conveniently supplied to the suction means and/or to the thermal conditioning means (block 15c) in a step c).

Preferably, after a predetermined period of time, after step c) the cycle is carried out again starting from step a).

## Claims

1. A turbine comprising at least one blade (1), the at least one blade (1) comprising
- at least one suction duct (11) in the blade (1), having at least one inlet opening (13) for a fluid into which the at least one blade (1) can be immersed;
- at least one delivery duct (12) in the blade (1), having at least one outlet opening (14) for the fluid;
wherein the at least one suction duct (11) and the at least one delivery duct (12) are connected to each other;
wherein the turbine comprises suction means (21) adapted to generate a flow of fluid from the at least one suction duct (11) to the at least one delivery duct (12); wherein said at least one blade (1) comprises a first outer face (18) and a second outer face (19), opposite to the first outer face (18);
**characterized in that**
said at least one inlet opening (13) and said at least one outlet opening (14) are at said first outer face (18);
and said at least one inlet opening (13) and said at least one outlet opening (14) face each other.

2. A turbine according to claim 1, wherein said at least one inlet opening (13) and said at least one outlet opening (14) are opposite to each other with respect to an axis defined by the at least one blade (1).

3. A turbine according to claim 2, wherein said axis is a longitudinal axis (X) of the at least one blade (1).

4. A turbine according to any one of the preceding claims, wherein the at least one blade (1) comprises a plurality of said suction ducts (11), which are distinct from one another, each provided with at least one respective inlet opening (13); and/or a plurality of said delivery ducts (12), which are distinct from one another, each provided with at least one respective outlet opening (14);
wherein each suction duct (11) is connected to at least one delivery duct (12);
and wherein there are provided suction means (21) adapted to generate a flow of fluid from each suction duct (11) to the at least one delivery duct (12) connected thereto.

5. A turbine according to claim 4, wherein at least one suction duct (11) of said plurality of suction ducts (11) is connected to two or more delivery ducts (12) of said plurality of delivery ducts (12); and/or at least two suction ducts (11) of said plurality of suction ducts (11) are connected to a same delivery duct (12) of said plurality of delivery ducts (12).

6. A turbine according to any one of the preceding claims, wherein said suction means (21) comprise one or more suction devices.

7. A turbine according to claim 6, wherein said suction means (21) comprise one or more suction devices for each suction duct (11) and delivery duct (12) pair.

8. A turbine according to claim 6 or 7, wherein each suction device comprises, or consists of a compressor or a pump or a fan.

9. A turbine according to any one of the preceding claims, wherein said suction means (21) are arranged in said at least one blade (1) and/or in a structure of the turbine which is different from the at least one blade (1).

10. A turbine according to claim 9, comprising a shaft (71) adapted to rotate about a rotation axis (R); wherein said at least one blade (1) is fastened to said shaft (71).

11. A turbine according to claim 10, wherein said structure is said shaft (71) or a hub (41) to which the at least one blade (1) is fastened.

12. A turbine according to any one of the preceding claims, wherein there are provided a plurality of inlet openings (13) for each suction duct (11) and/or a plurality of outlet openings (14) for each delivery duct (12).

13. A turbine according to any one of the preceding claims, of the vertical-rotation axis type or of the horizontal-rotation axis type.

14. A turbine according to any one of the preceding claims, comprising thermal conditioning means adapted to heat and/or cool the fluid crossing said at least one blade (1).

15. A turbine according to any one of the preceding claims, comprising a plurality of blades (1).

## Patentansprüche

1. Turbine mit mindestens einer Schaufel (1), wobei die mindestens eine Schaufel (1) Folgendes umfasst
- mindestens einen Saugleitung (11) in der Schaufel (1), der mindestens eine Einlassöffnung (13) für ein Fluid aufweist, in das die mindestens eine Schaufel (1) eingetaucht werden kann;
- mindestens eine Versorgungsleitung (12) in der Schaufel (1), der mindestens eine Austrittsöffnung (14) für das Fluid aufweist;
wobei die mindestens eine Saugleitung (11) und die mindestens eine Versorgungsleitung (12) miteinander verbunden sind;
wobei die Turbine Saugmittel (21) umfasst, die so eingerichtet sind, dass sie einen Fluidstrom von der mindestens einen Saugleitung (11) zu der mindestens einen Versorgungsleitung (12) erzeugt; wobei die mindestens eine Schaufel (1) eine erste Außenfläche (18) und eine zweite Außenfläche (19) umfasst, die der ersten Außenfläche (18) gegenüberliegt;
**dadurch gekennzeichnet, dass**
die mindestens eine Einlassöffnung (13) und die mindestens eine Austrittsöffnung (14) sich an der ersten Außenfläche (18) befinden;
und die mindestens eine Einlassöffnung (13) und die mindestens eine Austrittsöffnung (14) einander gegenüberliegen.

2. Turbine nach Anspruch 1, wobei die mindestens eine Einlassöffnung (13) und die mindestens eine Austrittsöffnung (14) in Bezug auf eine durch die mindestens eine Schaufel (1) definierte Achse einander gegenüberliegen.

3. Turbine nach Anspruch 2, wobei die Achse eine Längsachse (X) der mindestens einen Schaufel (1) ist.

4. Turbine nach einem der vorhergehenden Ansprüche, wobei die mindestens eine Schaufel (1) mehrere voneinander getrennte Saugleitungen (11) umfasst, die jeweils mit mindestens einer entsprechenden Einlassöffnung (13) versehen sind, und/oder mehrere voneinander getrennte Versorgungsleitungen (12), die jeweils mit mindestens einer entsprechenden Austrittsöffnung (14) versehen sind;
wobei jede Saugleitung (11) mit mindestens einer Versorgungsleitung (12) verbunden ist;
und wobei Saugmittel (21) vorgesehen sind, die eingerichtet sind, einen Fluidstrom von jeder Saugleitung (11) zu der mindestens einen damit verbundenen Versorgungsleitung (12) zu erzeugen.

5. Turbine nach Anspruch 4, wobei mindestens eine Saugleitung (11) der Vielzahl von Saugleitungen (11) mit zwei oder mehr Versorgungsleitungen (12) der Vielzahl von Versorgungsleitungen (12) verbunden ist; und/oder mindestens zwei Saugleitungen (11) der Vielzahl von Saugleitungen (11) mit derselben Versorgungsleitung (12) der Vielzahl von Versorgungsleitungen (12) verbunden sind.

6. Turbine nach einem der vorhergehenden Ansprüche, wobei die Saugmittel (21) eine oder mehrere Saugvorrichtungen umfassen.

7. Turbine nach Anspruch 6, wobei die Saugmittel (21) eine oder mehrere Saugvorrichtungen für jedes Paar aus Saugleitungen (11) und Versorgungsleitungen (12) umfassen.

8. Turbine nach Anspruch 6 oder 7, wobei jede Saugvorrichtung einen Kompressor oder eine Pumpe oder ein Gebläse umfasst oder aus einem Kompressor oder einer Pumpe oder einem Gebläse besteht.

9. Turbine nach einem der vorhergehenden Ansprüche, wobei die Saugmittel (21) in der mindestens einen Schaufel (1) und/oder in einer Struktur der Turbine angeordnet sind, die sich von der mindestens einen Schaufel (1) unterscheidet.

10. Turbine nach Anspruch 9, mit einer Welle (71), die um eine Drehachse (R) drehbar ist, wobei die mindestens eine Schaufel (1) an der Welle (71) befestigt ist.

11. Turbine nach Anspruch 10, wobei die Struktur die Welle (71) oder eine Nabe (41) ist, an der die mindestens eine Schaufel (1) befestigt ist.

12. Turbine nach einem der vorhergehenden Ansprüche, wobei für jede Saugleitung (11) mehrere Einlassöffnungen (13) und/oder für jede Versorgungsleitung (12) mehrere Austrittsöffnungen (14) vorgesehen sind.

13. Turbine nach einem der vorhergehenden Ansprüche mit vertikaler Rotationsachse oder mit horizontaler Rotationsachse.

14. Turbine nach einem der vorhergehenden Ansprüche, die thermische Konditionierungsmittel umfasst, die so eingerichtet sind, dass sie das die mindestens eine Schaufel (1) durchlaufende Fluid erwärmt und/oder kühlt.

15. Turbine nach einem der vorhergehenden Ansprüche, die eine Vielzahl von Schaufeln umfasst (1).

## Revendications

1. Turbine comprenant au moins une pale (1), la au moins une pale (1) comprenant
- au moins un conduit d'aspiration (11) dans la pale (1), ayant au moins une ouverture d'entrée (13) pour un fluide dans lequel la au moins une pale (1) peut être immergée ;
- au moins un conduit de refoulement (12) dans la pale (1), ayant au moins une ouverture de sortie (14) pour le fluide ;
dans lequel le au moins un conduit d'aspiration (11) et le au moins un conduit de refoulement (12) sont reliés l'un à l'autre ;
dans laquelle la turbine comprend des moyens d'aspiration (21) adaptés pour générer un flux de fluide depuis le au moins un conduit d'aspiration (11) vers le au moins un conduit de refoulement (12) ; dans laquelle ladite au moins une pale (1) comprend une première face extérieure (18) et une seconde face extérieure (19), opposée à la première face extérieure (18) ;
**caractérisée en ce que**
ladite au moins une ouverture d'entrée (13) et ladite au moins une ouverture de sortie (14) sont sur ladite première face extérieure (18) ;
et ladite au moins une ouverture d'entrée (13) et ladite au moins une ouverture de sortie (14) se font face.

2. Turbine selon la revendication 1, dans laquelle ladite au moins une ouverture d'entrée (13) et ladite au moins une ouverture de sortie (14) sont opposées l'une à l'autre par rapport à un axe défini par la au moins une pale (1).

3. Turbine selon la revendication 2, dans laquelle ledit axe est un axe longitudinal (X) de la au moins une pale (1).

4. Turbine selon l'une quelconque des revendications précédentes, dans laquelle la au moins une pale (1) comprend une pluralité desdits conduits d'aspiration (11), qui sont distincts les uns des autres, pourvus chacun d'au moins une ouverture d'entrée (13) respective ; et/ou une pluralité desdits conduits de refoulement (12), qui sont distincts les uns des autres, pourvus chacun d'au moins une ouverture de sortie (14) respective ;
dans laquelle chaque conduit d'aspiration (11) est relié à au moins un conduit de refoulement (12) ;
et dans laquelle sont prévus des moyens d'aspiration (21) adaptés pour générer un flux de fluide depuis chaque conduit d'aspiration (11) vers le au moins un conduit de refoulement (12) relié à celui-ci.

5. Turbine selon la revendication 4, dans laquelle au moins un conduit d'aspiration (11) de ladite pluralité de conduits d'aspiration (11) est relié à au moins deux conduits de refoulement (12) de ladite pluralité de conduits de refoulement (12) ; et/ou au moins deux conduits d'aspiration (11) de ladite pluralité de conduits d'aspiration (11) sont reliés à un même conduit de refoulement (12) de ladite pluralité de conduits de refoulement (12).

6. Turbine selon l'une quelconque des revendications précédentes, dans laquelle lesdits moyens d'aspiration (21) comprennent un ou plusieurs dispositifs d'aspiration.

7. Turbine selon la revendication 6, dans laquelle lesdits moyens d'aspiration (21) comprennent un ou plusieurs dispositifs d'aspiration pour chaque paire de conduit d'aspiration (11) et de conduit de refoulement (12).

8. Turbine selon la revendication 6 ou 7, dans laquelle chaque dispositif d'aspiration comprend, ou consiste en un compresseur ou une pompe ou un ventilateur.

9. Turbine selon l'une quelconque des revendications précédentes, dans laquelle lesdits moyens d'aspiration (21) sont disposés dans ladite au moins une pale (1) et/ou dans une structure de la turbine qui est différente de la au moins une pale (1).

10. Turbine selon la revendication 9, comprenant un arbre (71) adapté pour tourner autour d'un axe de rotation (R) ; dans laquelle ladite au moins une pale (1) est fixée audit arbre (71).

11. Turbine selon la revendication 10, dans laquelle ladite structure est ledit arbre (71) ou un moyeu (41) auquel la au moins une pale (1) est fixée.

12. Turbine selon l'une quelconque des revendications précédentes, dans laquelle il est prévu une pluralité d'ouvertures d'entrée (13) pour chaque conduit d'aspiration (11) et/ou une pluralité d'ouvertures de sortie (14) pour chaque conduit de refoulement (12).

13. Turbine selon l'une quelconque des revendications précédentes, du type à axe de rotation vertical ou du type à axe de rotation horizontal.

14. Turbine selon l'une quelconque des revendications précédentes, comprenant des moyens de conditionnement thermique adaptés pour chauffer et/ou refroidir le fluide traversant ladite au moins une pale (1).

15. Turbine selon l'une quelconque des revendications précédentes, comprenant une pluralité de pales (1).
